# EUROPÄISCHE PATENTSCHRIFT

(11) **EP 1 990 263 B1**
(45) Veröffentlichungstag und Bekanntmachung des Hinweises auf die Patenterteilung: **24.03.2010**
(21) Anmeldenummer: 08007171.5
(22) Anmeldetag: 11.04.2008
(51) Int. Cl.: B62D 35/00

(54) **Fremdkraftbetätigter Spoiler für Kraftfahrzeuge**
Spoiler actuated by external power for motor vehicles
Spoiler entraîné par une force extérieure pour véhicules automobiles

(30) Priorität: 09.05.2007 DE 102007021667
(43) Veröffentlichungstag der Anmeldung: 12.11.2008
(73) Patentinhaber: Audi AG, 85045 Ingolstadt (DE)
(72) Erfinder: Binder, Franz, 85101 Lenting (DE); Sendtner, Jürgen, 85095 Zandt (DE)
(74) Vertreter: Engelhardt, Harald

(56) Entgegenhaltungen:
- DE-A1- 10 104 752
- DE-B3-102006 059 726

## Beschreibung

Die Erfindung bezieht sich auf einen Spoiler für Kraftfahrzeuge gemäß dem Oberbegriff des Patentanspruchs 1.

Bei Spoilern, die von einer Nicht-Gebrauchsstellung in eine angehobene Wirkstellung ausgefahren werden können, kann es im Winterbetrieb vorkommen, dass das Spoilerblatt mit einer Eisschicht überzogen ist. Bei einer entsprechend dicken Eisschicht sind entsprechend hohe Betätigungskräfte zum Ausfahren des Spoilers notwendig. Dies erfordert hohe Kraftreserven vom Antriebssystem und eine entsprechende Dimensionierung der die Ausstellung bewirkenden Bauteile.

Aus der DE 101 04 752 A1 ist ein Spoiler bekannt, welcher aus einer Ruhestellung in einer Vertiefung in eine Betriebsstellung außerhalb der Vertiefung bewegbar ist. Um die Bewegung des Spoilers bei Vereisung zu erleichtern, kann der Spoiler oder ein sich an diesen anschließendes Karosserieteil im Bereich der gemeinsamen Fuge beheizbar ausgeführt sein.

Der vorliegenden Erfindung liegt die Aufgabe zugrunde, einen fremdkraftbetätigten Spoiler für Kraftfahrzeuge so auszubilden, dass er ohne erhöhten Kraftaufwand auch bei dickeren Eisschichten ausgefahren werden kann.

Die Aufgabe wird dadurch gelöst, dass vor dem Ausfahren des Spoilers zunächst eine Bewegung um einen geringen Betrag entgegen der Ausfahrrichtung durchgeführt wird. Diese Maßnahme basiert auf der Tatsache, dass weniger Kraft benötigt wird wenn das festgefrorene Spoilerblatt von der Eisschicht weg bewegt wird, als wenn die Spoilerfläche versucht, die Eisschicht durch Druck nach außen zu zerstören.

Der vorbeschriebene Effekt kann wesentlich erhöht werden, wenn vor dem Ausfahren des Spoilers zunächst seine Hinterkante oder seine Vorderkante entgegen der Ausfahrrichtung bewegt wird. Wird eine der beiden Kanten um einen geringen Betrag nach unten verschwenkt, dann bricht durch den Scharniereffekt die Eisschicht an der gegenüberliegenden Kante.

Es ist vorteilhaft, wenn im weiteren Bewegungsablauf die Hinterkante/Vorderkante und anschließend die gegenüberliegende Kante des Spoilers entgegen der Ausfahrrichtung bewegt werden. Dadurch nimmt das Spoilerblatt am Ende dieser Bewegung eine etwa parallele Position zu der Ausgangsposition ein.

Gemäß einer vorteilhaften Weiterbildung kann ausgehend von dem abgesenkten Spoiler beim Ausfahren des Spoilers zunächst seine Vorderkante oder Hinterkante und anschließend die gegenüberliegende Kante angehoben werden. Zweckmäßig ist es, wenn der Bewegungsablauf in umgekehrter Reihenfolge wie bei der Bewegung entgegen der Ausfahrrichtung stattfindet. Das heißt, dass zunächst diejenige Kante ausgefahren wird, die als erstes zurückgefahren wurde. Dabei bricht die über dieser Kante angeordnete Eisschicht. Anschließend wird dann die gegenüberliegende Kante angehoben und durch das im ersten Bewegungsablauf gebrochene Eis hindurchgeführt.

Es ist natürlich auch möglich, die Vorderkante und die Hinterkante des Spoilers intermittierend zu bewegen oder der Bewegung der Vorderkante oder Hinterkante sowohl in, als auch entgegen der Ausfahrrichtung eine kurzhubige Schwingung (Vibration) zu überlagern.

Um die vorstehend angesprochenen Bewegungen, sowohl zum Ausfahren des Spoiler, als auch für die Zurückbewegung entgegen der Ausfahrrichtung, durchzuführen, können an sich bekannte Bauteile Verwendung finden. Dies gilt auch für den Antrieb des Spoilers, der elektromechanisch, pneumatisch oder hydraulisch betätigt werden kann.

Ein Ausführungsbeispiel der Erfindung ist in der Zeichnung dargestellt und wird nachfolgend näher beschrieben. Es zeigen
- Figur 1: einen Spoiler mit einer Eisbrechfunktion in der ersten Bewegungsphase,
- Figur 2: den Spoiler aus Figur 1 in der zweiten Bewegungsphase und
- Figur 3: den Spoiler aus Figuren 1 und 2 in der dritten Bewegungsphase.

Die Figuren zeigen als Prinzipbilder und im Schnitt einen Spoiler 5, welcher in einer Vertiefung 7 der Karosserie eines Kraftfahrzeuges versenkbar ist.

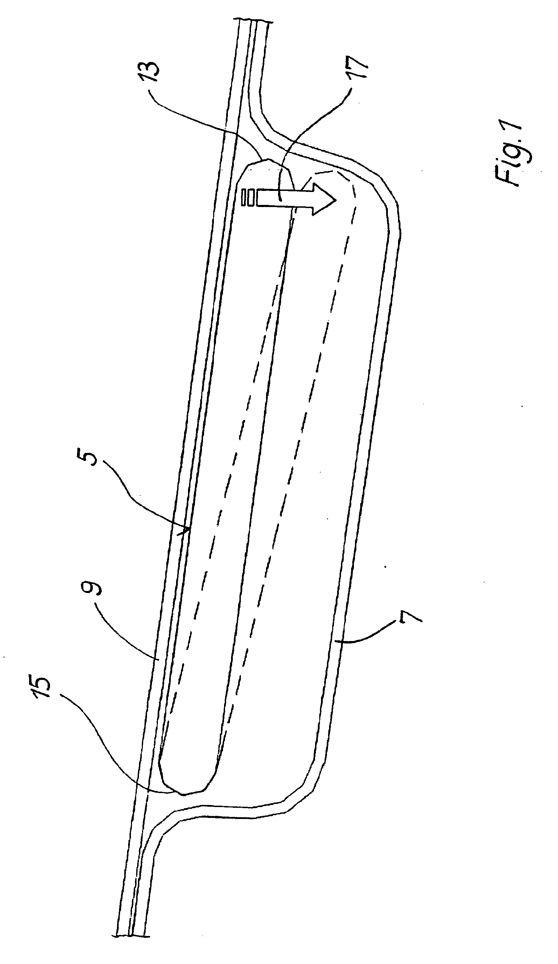

In Figur 1 ist mittels durchgezogener Linien der Spoiler 5 in seiner Ausgangslage dargestellt, in welcher seine Oberfläche etwa flächenbündig an die Ränder der Vertiefung 7 anschließt. Das Bezugszeichen 9 bezeichnet eine den Spoiler 5 und die angrenzenden Karosserieteile abdeckende Eisschicht.

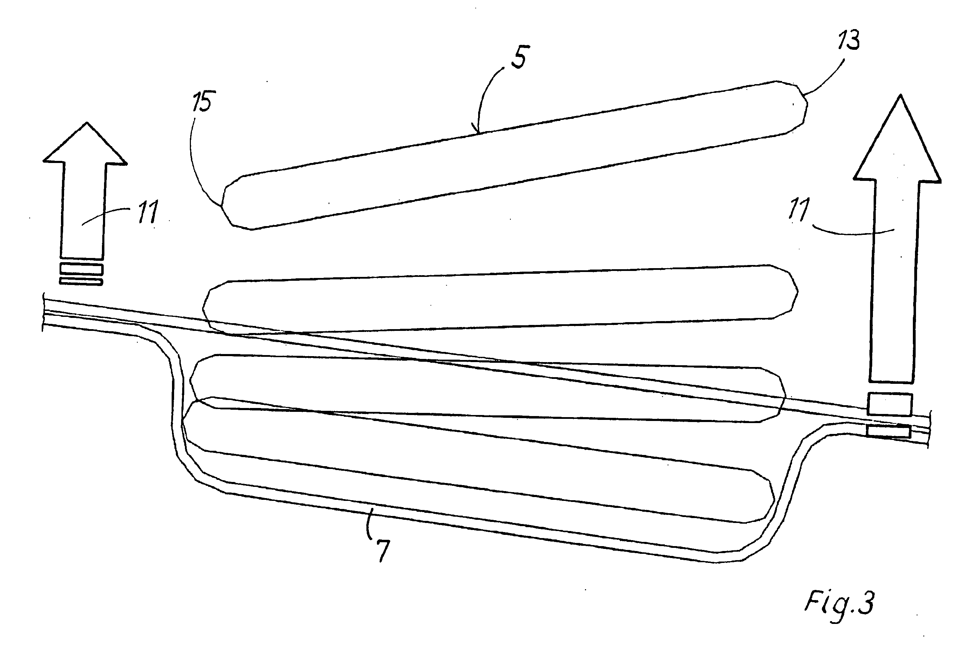

Der in Figur 1 gezeigte Spoiler 5 kann durch an sich bekannte und deshalb nicht dargestellte Maßnahmen in eine Betriebsstellung bewegt werden, wie dies in Figur 3 durch Pfeile 11 angedeutet ist. In der Betriebsstellung verläuft der Spoiler 5 schräg nach hinten oben, das heißt, seine Hinterkante 13 ist höher als seine Vorderkante 15 angeordnet.

Bevor der Spoiler 5 in seine Betriebsstellung ausfährt, werden zunächst die in den Figuren 1 bis 3 angedeuteten Bewegungen durchgeführt, um die Eisschicht 9 zu zerstören. Diese Bewegungen können durch Gestänge, Kulissen oder sonstige Bauteile erzeugt werden, auf die hier nicht näher eingegangen wird.

In der ersten, in Figur 1 dargestellten Bewegungsphase wird die Hinterkante 13 des Spoilers um einen geringen Betrag abgesenkt, wie dies durch gestrichelte Linien und einen Pfeil 17 angedeutet ist. Durch diese Bewegung, bricht die Eisschicht 9 an der Vorderkante 15 des Spoilers 5 auf.

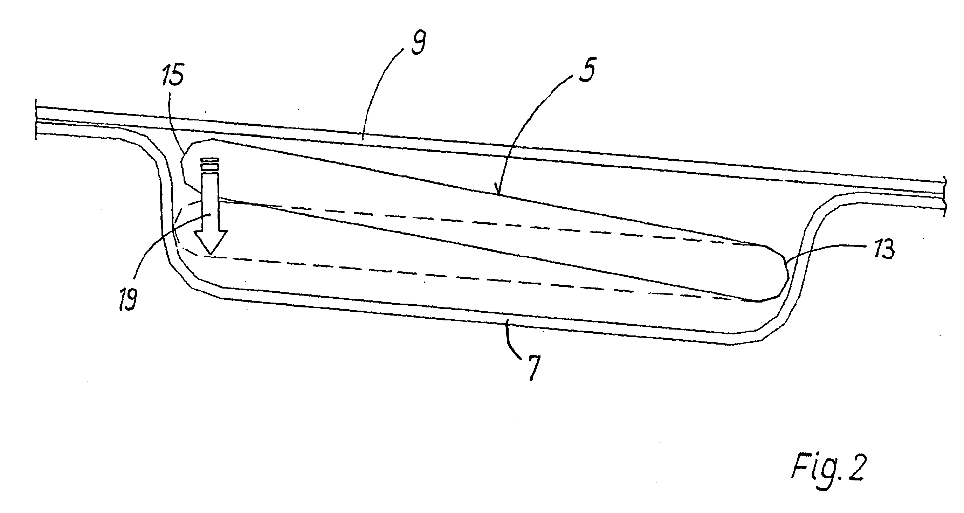

In der zweiten, in Figur 2 dargestellten Bewegungsphase wird dann die Vorderkante 15 des Spoilers 5 abgesenkt (angedeutet durch gestrichelte Linien und einen Pfeil 19). In diesem Bewegungsabschnitt löst sich die Oberseite des Spoilers 5 von der Eisschicht 9 ab. Der Spoiler 5 nimmt am Ende dieser Bewegungsphase eine Lage in der Vertiefung 7 ein, welche etwa parallel zu seiner Ausgangslage ist.

Ausgehend von dieser Position wird der Spoiler 5 nunmehr in die gewünschte Ausfahrrichtung bewegt, um in die Betriebsstellung zu gelangen (siehe Fig. 3). Dabei wird zunächst die Hinterkante 13 des Spoilers 5 angehoben, wodurch auch die Eisschicht im Bereich der Hinterkante 13 gebrochen wird. Im weiteren Bewegungsablauf wird zusammen mit der Hinterkante 13 auch die Vorderkante 15 des Spoilers 5 angehoben, welche ohne Probleme durch die bereits gebrochene Eisschicht 9 hindurch treten kann.

Hinsichtlich des Bewegungsablaufes ist zusammenfassend festzustellen, dass vor dem Ausfahren des Spoilers 5 in seine Betriebsstellung zunächst eine Bewegung entgegen der Ausfahrrichtung durchgeführt wird. Eine Pendelbewegung des Spoilers 5 schafft die Voraussetzung dafür, dass die Eisschicht wirkungsvoll zerstört wird.

## Patentansprüche

1. Fremdkraftbetätigter Spoiler für Kraftfahrzeuge, welcher aus einer Ruhestellung in einer Vertiefung in eine Betriebsstellung außerhalb der Vertiefung bewegbar ist, **dadurch gekennzeichnet, dass** vor dem Ausfahren des Spoilers (5) zunächst eine Bewegung um einen geringen Betrag entgegen der Ausfahrrichtung durchgeführt wird.

2. Spoiler nach Anspruch 1, **dadurch gekennzeichnet, dass** die Hinterkante (13) oder die Vorderkante (15) entgegen der Ausfahrrichtung bewegt wird.

3. Spoiler nach Anspruch 2, **dadurch gekennzeichnet, dass** zunächst die Hinterkante (13) oder Vorderkante (15) und anschließend die gegenüber liegende Kante des Spoilers (5) entgegen der Ausfahrrichtung bewegt werden.

4. Spoiler nach einem der Ansprüche 1 bis 3, **dadurch gekennzeichnet, dass** ausgehend von dem abgesenkten Spoiler (5) beim Ausfahren des Spoilers (5) zunächst seine Vorderkante (15) oder Hinterkante (13) und anschließend die gegenüber liegende Kante angehoben werden.

5. Spoiler nach Anspruch 2 oder 3, **dadurch gekennzeichnet, dass** der Bewegung der Hinterkante (13) oder Vorderkante (15) des Spoilers (5) eine kurzhubige Schwingung überlagert ist.

## Claims

1. Spoiler actuated by external power for motor vehicles, which spoiler can be moved from a rest position in a depression into an operating position outside the depression, **characterized in that**, before the spoiler (5) is deployed, a movement is firstly carried out over a short distance counter to the deploying direction.

2. Spoiler according to Claim 1, **characterized in that** the trailing edge (13) or the leading edge (15) is moved counter to the deploying direction.

3. Spoiler according to Claim 2, **characterized in that** firstly the trailing edge (13) or leading edge (15) and subsequently the opposite edge of the spoiler (5) are moved counter to the deploying direction.

4. Spoiler according to one of Claims 1 to 3, **characterized in that**, proceeding from the lowered state of the spoiler (5), as the spoiler (5) is deployed, first the leading edge (15) or trailing edge (13) thereof and subsequently the opposite edge are raised.

5. Spoiler according to Claim 2 or 3, **characterized in that** a short-stroke oscillation is superposed on the movement of the trailing edge (13) or leading edge (15) of the spoiler (5).

## Revendications

1. Spoiler entraîné par une force extérieure pour véhicules automobiles, qui peut être déplacé d'une position de repos dans un renfoncement, dans une position d'utilisation en dehors du renfoncement, **caractérisé en ce qu'**avant la sortie du spoiler (5), un mouvement d'une faible ampleur est d'abord effectué dans le sens inverse de la direction de sortie.

2. Spoiler selon la revendication 1, **caractérisé en ce que** l'arête arrière (13) ou l'arête avant (15) est déplacée dans le sens inverse de la direction de sortie.

3. Spoiler selon la revendication 2, **caractérisé en ce que** d'abord l'arête arrière (13) ou l'arête avant (15), puis l'arête opposée du spoiler (5), sont déplacées dans le sens inverse de la direction de sortie.

4. Spoiler selon l'une quelconque des revendications 1 à 3, **caractérisé en ce que**, partant du spoiler (5) abaissé, lors de la sortie du spoiler (5), d'abord son arête avant (15), ou son arête arrière (13), puis l'arête opposée, sont soulevées.

5. Spoiler selon la revendication 2 ou 3, **caractérisé en ce que** le déplacement de l'arête arrière (13) ou de l'arête avant (15) du spoiler (5) est superposé à un pivotement de petite ampleur.
